# EUROPEAN PATENT SPECIFICATION

(11) **EP 1 927 871 B1**
(45) Date of publication and mention of the grant of the patent: **25.07.2012**
(21) Application number: 05785471.3
(22) Date of filing: 20.09.2005
(51) Int. Cl.: C08G 18/62, C08G 18/76, C08G 18/80, C09J 175/04, G02B 5/30, C09J 11/06, G02F 1/1335, C08K 5/29, C08K 5/34, G02B 27/28, C09J 133/08, C08F 220/18

(54) **PRESSURE-SENSITIVE ADHESIVE COMPOSITION FOR POLARIZING PLATE AND POLARIZING PLATE WITH PRESSURE-SENSITIVE ADHESIVE LAYER**
HAFTKLEBEZUSAMMENSETZUNG FÜR EINE POLARISIERUNGSPLATTE UND POLARISIERUNGSPLATTE MIT HAFTKLEBENDER SCHICHT
COMPOSITION ADHESIVE SENSIBLE A LA PRESSION DESTINEE A UNE PLAQUE DE POLARISATION ET PLAQUE DE POLARISATION DOTEE D'UNE COUCHE ADHESIVE SENSIBLE A LA PRESSION

(43) Date of publication of application: 04.06.2008
(73) Proprietor: SOKEN CHEMICAL & ENGINEERING CO. LTD.,, Toshima-ku, Tokyo 171-8531 (JP)
(72) Inventor: NISHINA, Sadahiko, Hirosehigashi 1-chome, Sayama-shi, Saitama 3501320 (JP)
(74) Representative: Calamita, Roberto
(86) International application number: PCT/JP2005/017256
(87) International publication number: WO 2007/034533

(56) References cited:
- WO-A1-03/011958
- JP-A- 2002 275 296
- JP-A- 2004 287 199
- JP-A- 2006 011 365
- US-A1- 2001 024 764
- DATABASE WPI Week 200524 Thomson Scientific, London, GB; AN 2005-225952 XP000002658567, & JP 2005 053976 A (SOKEN KAGAKU KK) 3 March 2005 (2005-03-03)

## Description

### Technical Field

The present invention relates to an adhesive composition for a polarizing plate and a polarizing plate with an adhesive layer obtained from the adhesive composition.
In more detail, the present invention relates to an adhesive composition for a polarizing plate which is suitably used for the production of a liquid crystal display, particularly the production of a large liquid crystal display, and relates to a polarizing plate with a layer of the adhesive.

### Background Art

The production of liquid crystal displays includes a step where a polarizing plate is laminated to a liquid crystal cell. In the step, the edge of the polarizing plate with an adhesive layer is attached to the liquid crystal cell, and then the whole of the polarizing plate is laminated to the liquid crystal cell using a laminator.
However, when the polarizing plate is laminated to the liquid crystal cell by such a method, deflection (internal stress) is developed in the adhesive layer during lamination by the own weight of the polarizing plate. As a result, even if there are no apparent changes immediately after the completion of lamination, separation or lifting of the polarizing plate is caused by the deflection of the adhesive layer when the display is used at a high temperature or under a hot and humid environment. In particular, such a problem has been significant in a large polarizing plate (for example, a polarizing plate with a bonding area of 300 mm x 380 mm or larger or bonding with a liquid crystal cell) that is laminated to a liquid crystal cell as large as 14 inches or more, the size frequently used in a monitor, a display for a personal computer, a television and the like.

Other factors of such adhesion failure of the polarizing plate include poor compatibility (wettability) between glass as a liquid crystal cell substrate and the adhesive layer provided on the polarizing plate.
In this respect, in Patent Document 1, there is a description of a development of an adhesive sheet that has an adhesive layer obtained from an adhesive composition which includes a plasticizer such as a phthalate ester or the like for the purpose that the adhesive layer absorbs and relaxes the shrinkage stress of the polarizing plate generated by dimensional change such as shrinkage of the polarizing plate itself under a high temperature and high humidity environment. However, Patent Document 1 does not address the deflection of adhesive layer by the own weight of the polarizing plate which is significant when laminating a large polarizing plate. According to a study by the present inventors, the effect of such adhesive layer is not quite sufficient (see. Comparative Example 4 in the present specification).

By the way, an organic molten salt that is liquid at room temperature, what is called an ionic liquid, has recently been developed. Its good compatibility with resins and high ionic conductivity (good electroconductivity) have led to use of the salt as an antistatic agent in various resin compositions (Patent Documents 2 to 8).
For example, Patent Document 8 describes an acrylic adhesive composition containing 5% by weight or more of the ionic liquid as an antistatic agent. However, the acrylic adhesive composition has a tackiness (peel strength at 180° after standing for 24 hours) of 25 N/dm (637 g/25 mm) or more, which is too high considering re-stripping properties (properties that when the lamination ends in failure, the polarizing plate together with the adhesive layer can be peeled without leaving a residue on the liquid crystal cell or without damaging the liquid crystal cell) that are required in the lamination of the polarizing plate.

Furthermore, Patent Documents 2 to 8 do not address the problems caused by the deflection of the adhesive layer as described above.
Patent Document 1: Japanese Patent No. 3272921
Patent Document 2: Japanese Patent Application Laid-Open Publication No. 2004-67543
Patent Document 3: Japanese Patent Application Laid-Open Publication No. 2004-256461
Patent Document 4: Japanese Patent Application Laid-Open Publication No. 2004-256462
Patent Document 5: Japanese Patent Application Laid-Open Publication No. H10-265673
Patent Document 6: Japanese Patent Application Laid-Open Publication No. 2004-217931
Patent Document 7: Japanese Patent Application Laid-Open Publication No. 2004-114665
Patent Document 8: Japanese Unexamined Patent Application Publication No. 2004-536940

### Disclosure of the Invention

### Problems to be Solved by the Invention

An object of the present invention is to provide an adhesive composition for a polarizing plate that is capable of preventing adhesion failure which is particularly significant when a large polarizing plate is laminated to a liquid crystal cell, particularly, capable of preventing the polarizing plate from separation and lifting at a high temperature or under a hot and humid environment. It is another object of the invention to provide a polarizing plate with an adhesive layer obtained from the adhesive composition.

### Means for Solving the Problems

As a result of the earnest study to solve the above problems, the present inventors have developed an adhesive layer obtained from an adhesive composition that contains an organic molten salt which is liquid at room temperature (hereinafter referred to as the ionic liquid), a specific (meth)acrylic polymer and an isocyanate-based crosslinking agent in specific amounts. The study has resulted in the findings that the ionic liquid provides an appropriate plasticization effect for the adhesive layer and improves the compatibility with an adherend. Thus, the adhesive layer can relax the deflection caused in lamination due to the own weight of a polarizing plate, thereby preventing separation and lifting caused with time by the deflection. Further, the adhesive layer can precisely follow fine unevenness on a glass surface that is a liquid crystal cell substrate (adherend) and thereby can prevent the polarizing plate from separation and lifting even at a high temperature or under a hot and humid environment. The present invention has been completed based on these findings.

In more detail, the present invention relates to the following.
An adhesive composition for a polarizing plate according to the present invention comprises:
100 parts by weight of a (meth)acrylic polymer (A) with a weight average molecular weight of 1,000,000 or more obtained by copolymerizing at least a monomer containing a hydroxyl group (a1), a monomer containing at least one of a carboxyl group, an amino group and an amide group as an optional monomer (a2), and a substituted and/or unsubstituted alkyl (meth)acrylate (a3) other than the above (a1) and (a2), with the proviso that the monomer (a2) is fed in an amount of 0 to 0.5% by weight relative to the total amount of monomers;
0.1 to 8 parts by weight of an organic molten salt (B) that is liquid at room temperature; and
0.03 to 1 part by weight of an isocyanate-based crosslinking agent (C).

The organic molten salt (B) that is liquid at room temperature is preferably an onium salt comprising a cation having 6 to 50 carbon atoms and containing a quaternary nitrogen atom, and an anion containing a fluorine atom.
The cation having 6 to 50 carbon atoms and containing a quaternary nitrogen atom is preferably selected from a quaternary ammonium cation, an imidazolium cation, a pyrrolidinium cation, a pyridinium cation and a piperidinium cation, and the anion containing a fluorine atom is preferably a bis(trifluoromethylsulfonyl)imidate ion, a trifluoromethanesulfonate ion, a tetrafluoroborate ion or a hexafluorophosphate ion.

Furthermore, in the present invention, the monomer (a1) is preferably a hydroxyalkyl (meth)acrylate; the monomer (a3) is preferably an alkyl (meth)acrylate, a combination of an alkyl (meth)acrylate and an alkoxyalkyl (meth)acrylate, a combination of an alkyl (meth)acrylate and an aryloxyalkyl (meth)acrylate, or a combination of an alkyl (meth)acrylate and an arylalkyl (meth)acrylate; and the feeding amount of the monomer (a2) is preferably not more than 0.2% by weight.

Moreover, the alkyl (meth)acrylates preferably include n-butyl acrylate, and the feeding amount of the n-butyl acrylate in the synthesis of the (meth)acrylic polymer (A) is preferably not less than 70% by weight relative to the total amount of monomers.
A polarizing plate with an adhesive layer according to the present invention comprises an adhesive layer obtained from the above adhesive composition on a surface of the polarizing plate.

### Advantages of the Invention

According to the present invention, the adhesive layer on a surface of the polarizing plate has an appropriate plasticization effect and improved compatibility. The adhesive layer can relax the deflection caused in lamination particularly of a large polarizing plate due to the own weight of the polarizing plate, thereby preventing separation and lifting caused with time by the deflection. Further, the adhesive layer can precisely follow fine unevenness on a glass surface that is a liquid crystal cell substrate and thereby can reliably prevent the polarizing plate from separation and lifting from the liquid crystal cell even at a high temperature or under a hot and humid environment.

The polarizing plate with the adhesive layer of the present invention generally has a 180° tensile peeling strength in the range of 400 to 600 g/25 mm and can simultaneously satisfy the conflicting requirements, that is, the adhesiveness not causing separation and lifting with time, and the re-stripping properties.

### Best Mode for Carrying Out the Invention

The present invention is specifically described below.
An adhesive composition for a polarizing plate of the present invention contains at least a specific (meth)acrylic polymer (A), an ionic liquid (B) and an isocyanate-based crosslinking agent (C) each in a specific amount.
Each of the components (A) to (C) will be described first and thereafter the preparation of the adhesive composition for a polarizing plate, and a polarizing plate with an adhesive layer obtained from the adhesive composition will be described in order.

### (Meth)acrylic polymer (A)

A (meth)acrylic polymer used for the present invention can be obtained by copolymerizing at least a monomer containing a hydroxyl group (a1), a monomer containing at least one as an optional monomer a carboxyl group, an amino group and an amide group as an optional monomer (a2), and a substituted and/or unsubstituted alkyl (meth)acrylate (a3) other than the above (a1) and (a2) (with the proviso that the monomer (a2) is fed in an amount of 0 to 0.5% by weight relative to the total amount of monomers). Its weight average molecular weight is generally 1,000,000 or more, preferably 1,300,000 to 1,800,000. That is, the (meth)acrylic polymer is obtained by using the monomers (a1) and (a3) as essential raw materials and, as necessary, the monomer (a2) or a monomer (a4) described later as an optional monomer, and copolymerizing these monomers in specific amounts.

When the polymer has a weight average molecular weight of 1,000,000 or higher, preferably within the above range, the obtainable adhesive composition for a polarizing plate can form an adhesive layer which has improved cohesion force to ensure durability even at a high temperature or under a hot and humid environment. With such molecular weight, the addition of the ionic liquid as described later can favorably provide a plasticization effect and improved compatibility of the adhesive layer. As a result, the adhesive layer will not foam or separate even at a high temperature or under a hot and humid environment.

In the present specification, the weight average molecular weight is measured by gel permeation chromatography (GPC) relative to polystyrene standards.
The above (meth)acrylic polymer may be produced by copolymerizing the above monomers using a publicly known method without limitation. For example, the monomers are added to a reaction solvent, the gas phase in the reaction system is purged with an inert gas such as nitrogen, and the monomers are polymerized with heating and stirring optionally in the presence of a reaction initiator.

The reaction solvent used herein may be an organic solvent. Specific examples include aromatic hydrocarbons such as toluene, xylene and the like; aliphatic hydrocarbons such as n-hexane and the like; esters such as ethyl acetate, butyl acetate and the like; aliphatic alcohols such as n-propyl alcohol, isopropyl alcohol and the like; and ketones such as methyl ethyl ketone, methyl isobutyl ketone, cyclohexanone and the like.

When the reaction initiator is used, for example, azobisisobutyronitrile, benzoyl peroxide, di-tert-butyl peroxide, cumene hydroperoxide and the like may be used.
The reaction temperature in the above polymerization reaction is generally 50 to 90°C, and the reaction time is generally 2 to 20 hours, preferably 4 to 12 hours. The reaction solvent is used in an amount of 50 to 300 parts by weight and the reaction initiator is generally used in an amount of 0.01 to 10 parts by weight, relative to 100 parts by weight of the total monomers.

In the polymerization reaction, each of the monomers may be fed in an amount corresponding to the amount of respective repeating units in the target (meth)acrylic polymer, but is preferably used in a specific amount as described below. Monomer containing hydroxyl group (a1)
Examples of the monomers containing a hydroxyl group for use in the synthesis of the (meth)acrylic polymer include hydroxyalkyl (meth)acrylates containing a C₂-C_{I8}, preferably C₂-C₁₂ hydroxyalkyl group such as 2-hydroxyethyl (meth) acrylate, 2-hydroxypropyl (meth)acrylate, 4-hydroxybutyl (meth)acrylate and the like; halogenated hydroxyalkyl (meth)acrylates containing a C₂-C₁₈, preferably C₂-C₁₂ halogenated hydroxyalkyl group such as chloro-2-hydroxypropyl (meth) acrylate and the like; and allyl alcohols. These may be used singly or in combination of two or more kinds.

Among these, the hydroxyalkyl (meth) acrylates are preferred, and 2-hydroxyethyl (meth)acrylate and 4-hydroxybutyl (meth)acrylate are more preferred.
The monomer containing a hydroxyl group is generally fed to the copolymerization for the (meth) acrylic polymer in an amount of 0.3 to 5% by weight, preferably 1 to 3% by weight with respect to 100% by weight of the total amount of monomers used in the copolymerization. When the amount of the monomer containing a hydroxyl group is within the above range, the obtainable (meth)acrylic polymer reacts with the isocyanate-based crosslinking agent (C) to form a three-dimensional crosslinking structure having good cohesion force. Thus, foaming at a high temperature or under a hot and humid environment is suppressed. Further, such amount does not hinder the plasticization and compatibility improvement of the adhesive layer by the addition of the ionic liquid (B) as described later.

In the present specification, a compound having a carboxyl group, an amino group or an amide group together with a hydroxyl group is classified not as the component (a1) but as the component (a2) described below.
Monomer containing at least one of carboxyl group, amino group and amide group (a2)
Examples of the monomers containing at least one of a carboxyl group, an amino group and an amide group for use in the synthesis of the (meth)acrylic polymer include:
monomers containing a carboxyl group, represented by unsaturated carboxylic acids such as unsaturated monocarboxylic acids such as (meth)acrylic acid, β-carboxyethyl acrylate, crotonic acid, α-methylcrotonic acid, α-ethylcrotonic acid, isocrotonic acid, tiglic acid, angelic acid and the like; and unsaturated dicarboxylic acids such as fumaric acid, itaconic acid, maleic acid, citraconic acid, mesaconic acid, glutaconic acid, hydromuconic acid and the like;
monomers containing an amino group such as dimethylaminoethyl (meth)acrylate, diethylaminoethyl (meth)acrylate and the like;
monomers containing an amide group such as (meth) acrylamide, dimethyl (meth) acrylamide, diethyl (meth) acrylamide and the like; and
monomers containing 2 or more groups among a carboxyl group, an amino group and an amide group in combination such as dimethylaminopropyl (meth)acrylamide.

These monomers may be used singly or in combination of two or more kinds.
These monomers containing at least one of the carboxyl, amino and amide groups may be used as required to produce the (meth)acrylic polymer, together with the component (a1), the component (a3) and the optional component (a4). Specifically, the amount of this monomer is generally not more than 0.5% by weight (0 to 0.5% by weight), preferably not more than 0.2% by weight (0 to 0.2% by weight) and more preferably zero (0% by weight) based on the total amount of monomers used in the copolymerization as 100% by weight. The use exceeding the above upper limit can destroy the effects of the ionic liquid, i.e., plasticization and improved compatibility of the adhesive layer. In more detail, when the component (a3) is copolymerized in an amount exceeding the above upper limit, the ionic liquid will not be distributed homogeneously and may fail to provide a plasticization effect and improved compatibility.

### Substituted and/or unsubstituted alkyl (meth)acrylate (a3)

Examples of the substituted and/or unsubstituted alkyl (meth)acrylates (a3) other than the above (a1) and (a2) for use in the synthesis of the (meth)acrylic polymer include alkyl (meth)acrylates containing a C₁-C₁₈ alkyl group such as methyl (meth)acrylate, ethyl (meth)acrylate, n-propyl (meth)acrylate, isopropyl (meth)acrylate, n-butyl (meth)acrylate, isobutyl (meth)acrylate, 2-ethylhexyl (meth)acrylate, n-octyl (meth)acrylate, isooctyl (meth)acrylate, lauryl (meth)acrylate, stearyl (meth)acrylate, cyclohexyl (meth)acrylate and the like; alkoxyalkyl (meth) acrylates containing a C₃-C₁₈ alkoxyalkyl group such as methoxyethyl (meth) acrylate, ethoxyethyl (meth) acrylate, butoxyethyl (meth)acrylate and the like; alkoxyethylene glycol (meth) acrylates containing a C₆-C₂₀ alkoxyethylene glycol residue such as butoxydiethylene glycol (meth)acrylate, methoxytriethylene glycol (meth)acrylate and the like; aryloxyalkyl (meth)acrylates containing a C₇-C₂₀ aryloxyalkyl group such as phenoxyethyl (meth)acrylate and the like; phenoxypolyethylene glycol (meth)acrylate; arylalkyl (meth) acrylates containing a C₇-C₂₀ arylalkyl group such as benzyl (meth)acrylate and the like; and others.

These monomers are used alone or in combination of two or more kinds so that the obtainable (meth) acrylic polymer will have a glass transition temperature (Tg) of 0°C or less, preferably -20 °C or less and so that the polarity of the (meth) acrylic polymer is increased to ensure good compatibility of the (meth)acrylic polymer and the ionic liquid described later.

Among these, the alkyl (meth) acrylate, a combination of the alkyl (meth)acrylate and the alkoxyalkyl (meth)acrylate, a combination of the alkyl (meth)acrylate and the aryloxyalkyl (meth) acrylate, or a combination of the alkyl (meth) acrylate and the arylalkyl (meth)acrylate is preferably used in view of increasing the polarity of the (meth)acrylic polymer without inhibiting the effects of plasticization and compatibility improvement of the adhesive layer by the addition of the ionic liquid and while ensuring low Tg of the (meth) acrylic polymer so as not to deteriorate the plasticity and adhesion of the adhesive layer.

Of the alkyl (meth)acrylates, alkyl acrylates containing a C₃-C₈ alkyl group are preferred and n-butyl acrylate is more preferred.
Of the alkoxyalkyl (meth)acrylates, alkoxyalkyl acrylates containing a C₃-C₁₂ alkoxyalkyl group are preferred and methoxyethyl acrylate is more preferred.

Of the aryloxyalkyl (meth)acrylates, phenoxyalkyl (meth)acrylates containing a C₇-C₂₀ phenoxyalkyl group are preferred and phenoxyethyl acrylate is more preferred.
Of the arylalkyl (meth)acrylates, benzyl acrylate is preferred.

The substituted and/or unsubstituted alkyl (meth) acrylates can be used as a main monomer component in the copolymerization for the (meth) acrylic polymer. Specifically, the amount thereof is generally 95 to 99.7% by weight, preferably 97 to 99% by weight relative to the total amount of monomers used in the copolymerization as 100% by weight.
When n-butyl acrylate is used as the alkyl (meth) acrylate, the feeding amount of n-butyl acrylate preferably accounts for not less than 70% by weight of the total amount of monomers. When the n-butyl acrylate is fed in such an amount, the polarity of the (meth)acrylic polymer is appropriately increased without elevating the Tg, and the compatibility with the ionic liquid is improved.

### Other monomers (a4)

Monomers other than the above (a1) to (a3) may be used as required in the production of the (meth) acrylic polymer (A). Such other monomers include styrene-based monomers such as styrene, methylstyrene, dimethylstyrene, trimethylstyrene, ethylstyrene, diethylstyrene, triethylstyrene, propylstyrene, butylstyrene, hexylstyrene, heptylstyrene, octylstyrene, fluorostyrene, chlorostyrene, bromostyrene, dibromostyrene, iodostyrene, nitrostyrene, acetylstyrene, methoxystyrene and the like; and vinyl-based monomers such as vinylpyrrolidone, vinylcarbazole, divinylbenzene, vinyl acetate, acrylonitrile and the like. These monomers are used alone or in combination of two or more kinds.

The other monomers (a4) may be used in such amounts that the advantages of the present invention are still achieved. Organic molten salt that is liquid at room temperature (B)
The organic molten salt that is liquid at room temperature for use in the present invention, what is called ionic liquid, is a publicly known organic molten salt having a melting point of 25°C or less at 1 atm. The organic molten salt is desirably an onium salt composed of a C₆-C₅₀, preferably C₁₀-C₃₀ cation containing a quaternary nitrogen atom, and an anion containing a fluorine atom.

Specifically, the above C₆-C₅₀ cation containing a quaternary nitrogen atom is preferably selected from a quaternary ammonium cation, an imidazolium cation, a pyrrolidinium cation, a pyridinium cation and a piperidinium cation, and
the above anion containing a fluorine atom is preferably a bis(trifluoromethylsulfonyl)imidate ion, a trifluoromethanesulfonate, a tetrafluoroborate ion or a hexafluorophosphate ion.

Examples of the quaternary ammonium cations include a trihexylmethylammonium ion, a trimethylhexylammonium ion, a trimethyloctylammonium ion, a diethylmethyl-2-methoxyethylammonium ion, trioctylmethylammonium ion and the like.
Examples of the imidazolium cations include 1-ethyl-3-methylimidazolium ion, 1-butyl-3-methylimidazolium ion, a 1-ethyl-2,3-dimethylimidazolium ion, a 1-hexyl-3-methylimidazolium ion, a 1-octyl-3-methylimidazolium ion, a 1-dodecyl-3-methylimidazolium ion and the like.

Examples of the pyrrolidinium cations include an N-butyl-N-methyl-pyrrolidinium ion, an N-propyl-N-N-methylpyrrolidinium ion, an N-hexyl-N-N-methylpyrrolidinium ion, an N-methoxyethyl-N-methylpyrrolidinium ion, an N-ethoxyethyl-N-methylpyrrolidinium ion, an N-propoxyethyl-N-methylpyrrolidinium ion, an N-(2-hydroxyethyl)-N-methylpyridinium ion and the like.

Examples of the pyridinium cations include an N-ethylpyridinium ion, an N-butylpyridinium ion, an N-(2-hydroxyethyl)-pyridinium ion, a 1-hexyl-4-methylpyridinium ion and the like.
Examples of the piperidinium cations include an N-methyl-N-butylpiperidinium ion, an N-octyl-N-methylpiperidinium ion, an N-hexyl-N-methylpiperidinium ion and the like.

More specifically, preferred onium salts as the ionic liquids include trihexylmethylammonium bis(trifluoromethylsulfonyl)imide, trioctylmethylammonium bis(trifluoromethylsulfonyl)imide, diethylmethyl-2-methoxyethylammonium tetrafluoroborate; 1-ethyl-3-methylimidazolium tetrafluoroborate, 1-ethyl-3-methylimidazolium bis(trifluoromethylsulfonyl)imide, 1-ethyl-3-methylimidazolium trifluoromethanesulfonate, 1-butyl-3-methylimidazolium tetrafluoroborate, 1-octyl-3-methylimidazolium hexafluorophosphate, 1-dodecyl-3-methylimidazolium hexafluorophosphate, 1-hexyl-3-methylimidazolium trifluoromethanesulfonate; N-butyl-N-methylpyrrolidinium bis(trifluoromethylsulfonyl)imide, N-propyl-N-N-methylpyrrolidinium trifluoromethanesulfonate, N-hexyl-N-N-methylpyrrolidinium hexafluorophosphate; N-butylpyridinium bis(trifluoromethylsulfonyl)imide, 1-hexyl-4-methylpyridinium bis(trifluoromethylsulfonyl)imide, N-butylpyridinium tetrafluoroborate, 1-hexyl-4-methylpyridinium hexafluorophosphate; N-butyl-N-methylpiperidinium bis(trifluoromethylsulfonyl)imide, N-octyl-N-methylpiperidinium hexafluorophosphate, N-hexyl-N-methylpiperidinium trifluoromethanesulfonate and the like.

The ionic liquid is generally used in an amount such that 0.1 to 8 parts by weight, preferably 1 to 4 parts by weight is contained per 100 parts by weight of the (meth)acrylic polymer (A).
When the ionic liquid is contained in the above amount in the adhesive composition for a polarizing plate, the compatibility of the ionic liquid with the (meth) acrylic polymer in the adhesive composition for a polarizing plate is good. When such composition forms an adhesive layer on a surface of a polarizing plate, the adhesive layer is appropriately plasticized and shows improved compatibility with an adherend. As a result, the adhesive layer can relax the deflection by the own weight of the polarizing plate, which has been a problem in the process of laminating the polarizing plate in the production of liquid crystal displays, and the separation and lifting with time are prevented. Furthermore, the adhesive layer follows fine unevenness on a glass substrate (adherend) of liquid crystal cell to provide higher adhesion to the adherend and improved durability. As a result, separation and lifting of the polarizing plate from the liquid crystal cell are prevented even at a high temperature or under a hot and humid environment.

When the amount of the ionic liquid is below the lower limit described above, the above effects are not achieved. On the other hand, when the amount is greater than the upper limit described above, the adhesive layer is excessively plasticized, drastically reduces the adhesion, and causes separation and lifting of the polarizing plate from the liquid crystal cell at a high temperature or under a hot and humid environment.

### Isocyanate-based crosslinking agent (C)

Examples of the isocyanate-based crosslinking agents for use in the present invention include compounds containing two or more isocyanate groups in the molecule. Specific examples include tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethylxylylene diisocyanate, naphthalene diisocyanate, triphenylmethane triisocyanate, polymethylene polyphenyl isocyanate, and adducts of these isocyanates with polyols such as trimethylolpropane (for example, trimethylolpropane-xylylene diisocyanate adduct).

The isocyanate-based crosslinking agent is generally used in an amount such that 0.03 to 1 part by weight, preferably 0.1 to 0.5 part by weight is contained per 100 parts by weight of the (meth) acrylic polymer (A).
When the isocyanate-based crosslinking agent is used in the above amount, the obtainable adhesive composition for a polarizing plate forms an adhesive layer that achieves an appropriate cohesion force by being crosslinked, and provides higher durability.

### Others (D)

The adhesive composition for a polarizing plate of the present invention may contain, in addition to the above components (A) to (C), publicly known solvents and various additives, for example, reaction solvents used in the polymerization reaction for the (meth)acrylic polymer described above, tackifiers, plasticizers, softening agents, dyes, pigments, silane coupling agents and inorganic fillers, either singly or in combination of two or more kinds in such amounts that the advantages of the present invention are still achieved.

### Preparation of Adhesive Composition for Polarizing plate

The adhesive composition contains at least the (meth) acrylic polymer (A) with a weight average molecular weight of 1,000,000 or more, the ionic liquid (B) and the isocyanate-based crosslinking agent (C) in the specific amounts. The (meth)acrylic polymer (A) as obtained by the polymerization reaction described above is generally dissolved or dispersed in the reaction solvent at 15 to 70% by weight.

The (meth) acrylic polymer may be mixed with the other components after the solvent is removed from the dispersion. In a preferred embodiment, the (meth) acrylic polymer is mixed with the other components without removing the reaction solvent, i.e., as a dispersion in the reaction solvent. This is because the (meth) acrylic polymer obtained by the polymerization reaction as described above is generally stably dispersed in the reaction solvent and such dispersion can be used as it is and be mixed uniformly with the other components.

The (meth)acrylic polymer (A) and the other components may be mixed by any known method without limitation. Because the isocyanate-based crosslinking agent (C) has a reactivity with the (meth)acrylic polymer (A), these are preferably mixed together immediately before application.

### Polarizing plate with Adhesive Layer

A polarizing plate with an adhesive layer of the present invention has an adhesive layer obtained from the above adhesive composition for a polarizing plate, on a surface of the polarizing plate.

Any known polarizing plates may be used without limitation. The advantages of the present invention will be more appreciated when a large polarizing plate, that is, a polarizing plate having a large area is employed. Examples include a polarizing plate with a three-layered structure in which a polyvinyl alcohol-based, polyester-based or polyvinyl butyral-based polarizer is sandwiched between two triacetylcellulose films and which has a bonding area of 300 mm x 380 mm or more for bonding with a liquid crystal cell. Along with the growth in size of the liquid crystal displays in recent years, the liquid crystal cells and the polarizing plates also tend to be upsized. The current largest polarizing plates have a bonding area of about 1000 mm x 1340 mm or less for bonding with a liquid crystal cell. The thickness of such polarizing plates is generally 130 to 200 µm.

Any methods may be used in the invention to form the adhesive layer on a surface of the polarizing plate. For example, the adhesive layer may be provided on a surface of the polarizing plate by applying the adhesive composition for a polarizing plate to the polarizing plate using a doctor blade, knife coater, comma coater, reverse roll coater, gravure coater or the like, followed by evaporating the solvent. Alternatively, the adhesive composition is applied to a separate support by the above means, then the solvent is removed to produce the adhesive layer on the support, and the adhesive layer is transferred to the polarizing plate using a laminator roll or the like.

By methods as described above, the adhesive layer is formed on the polarizing plate, generally to a thickness of 5 to 50 µm, preferably 15 to 30 µm. The polarizing plate with the adhesive layer may be thus obtained.
The polarizing plate with the adhesive layer obtained as described above is excellent in durability without foaming at the adhesive layer and without separation and lifting of the adhesive layer from the liquid crystal cell as adherend even when it is used at a high temperature or under a hot and humid environment for a long period of time.
Furthermore, the polarizing plate with the adhesive layer has excellent adhesiveness with a glass substrate of liquid crystal cell as adherend, and also has appropriate adhesive force preferred in view of re-stripping properties. Specifically, the 180° tensile peeling force of the polarizing plate with the adhesive layer is generally in the range of 400 to 600 g/25 mm as measured according to the procedure described in the following Examples.

When the adhesive force of a conventional adhesive composition is adjusted to the above range, the durability of adhesive layer is insufficient, so that the polarizing plate may have separation or lifting at a high temperature or under a hot and humid environment. In particular, this tendency is significant with a large polarizing plate with large heat shrinkage. In contrast, according to the present invention, the adhesive force as described above can be achieved to ensure the re-stripping properties and, at the same time, the ionic liquid used in the specific amount provides excellent adhesion to the adherend. Thus, the adhesive composition of the present invention can prevent separation and lifting even of a large polarizing plate and even at a high temperature or under a hot and humid environment

The present invention is specifically described based on the Examples in the following, but is not limited to these Examples.
The weight average molecular weight (Mw) in the following Examples was measured using GPC (HLC-8120 manufactured by Toso Co., Ltd.) and polystyrenes as standards under the following conditions.
Columns: G7000HXL x 1 + GMHXL x 2 + G2000HXL x 1
Solvent: tetrahydrofuran (THF)
Flow rate: 1.0 ml/min
Measurement Temperature: 40°C

### (Synthesis Example 1)

### Synthesis 1 of BA/4HBA polymer

99 parts by weight of n-butyl acrylate (BA), 1 part by weight of 4-hydroxybutyl acrylate (4HBA), 100 parts by weight of ethyl acetate and 0.2 part by weight of azobisisobutyronitrile (AIBN) were placed in a reaction vessel, and the air in the reaction vessel was replaced with nitrogen gas.

Subsequently, the reaction vessel was heated to 60°C with stirring under nitrogen atmosphere, and the reaction was performed for 6 hours.
After completion of the reaction, the reaction liquid was diluted with ethyl acetate to give a BA/4HBA polymer solution. The weight average molecular weight of the BA/4HBA polymer contained in the solution' was 1,600,000.

### (Synthesis Example 2)

### Synthesis of BA/2HEA polymer

A BA/2HEA polymer solution was obtained in the same manner as Synthesis Example 1 except that 1 part by weight of 2-hydroxyethyl acrylate (2HEA) was used instead of 4HBA. The weight average molecular weight of the BA/2HEA polymer contained in the solution was 1,600,000.

### (Synthesis Example 3)

### Synthesis of BA/MA/4HBA polymer

A BA/MA/4HBA polymer solution was obtained in the same manner as Synthesis Example 1 except that 79 parts by weight of BA, 20 parts by weight of methyl acrylate (MA) and 1 part by weight of 4HBA were used. The weight average molecular weight of the BA/MA/4HBA polymer contained in the solution was 1,600,000.

### (Synthesis Example 4)

### Synthesis of BA/MEA/4HBA polymer

A BA/MEA/4HBA polymer solution was obtained in the same manner as Synthesis Example 1 except that 79 parts by weight of BA, 20 parts by weight of methoxyethyl acrylate (MEA) and 1 part by weight of 4HBA were used. The weight average molecular weight of the BA/MEA/4HBA polymer contained in the solution was 1,600,000.

### (Synthesis Example 5)

### Synthesis of BA/POA/4HBA polymer

A BA/POA/4HBA polymer solution was obtained in the same manner as Synthesis Example 1 except that 79 parts by weight of BA, 20 parts by weight of phenoxyethyl acrylate (POA) and 1 part by weight of 4HBA were used. The weight average molecular weight of the BA/POA/4HBA polymer contained in the solution was 1,600,000.

### (Synthesis Example 6)

### Synthesis of BA/Bz/4HBA polymer

A BA/Bz/4HBA polymer solution was obtained in the same manner as Synthesis Example 1 except that 89 parts by weight of BA, 10 parts by weight of benzyl acrylate (Bz) and 1 part by weight of 4HBA were used. The weight average molecular weight of the BA/Bz/4HBA polymer contained in the solution was 1,600,000.

### (Synthesis Example 7)

### Synthesis 2 of BA/4HBA polymer

A BA/4HBA polymer solution was obtained in the same manner as Synthesis Example 1 except that 150 parts by weight of ethyl acetate and 10 parts by weight of toluene were used instead of 100 parts by weight of ethyl acetate. The weight average molecular weight of the BA/4HBA polymer contained in the solution was 750,000.

### (Synthesis Example 8)

### Synthesis of BA/4HBA/AA polymer

A BA/4HBA/AA polymer solution was obtained in the same manner as Synthesis Example 1 except that 98 parts by weight of BA, 1 part by weight of 4HBA and 1 part by weight of acrylic acid (AA) were used. The weight average molecular weight of the BA/4HBA/AA polymer contained in the solution was 1,600,000.

### Example 1

2 parts by weight of 1-hexyl-4-methylpyridinium bis(trifluoromethylsulfonyl)imide as an ionic liquid and 0.15 part by weight of trimethylolpropane-xylylene diisocyanate adduct (XDI) as an isocyanate crosslinking agent were mixed with 100 parts by weight (solid content) of the BA/4HBA polymer solution obtained in Synthesis Example 1 to give an adhesive composition.
The adhesive composition was evaluated for: (1) durability under a high temperature environment, (2) durability under a hot and humid environment, (3) 180° tensile peeling force and (4) wettability according to the following methods.

The results are shown in Table 1.

### (1) Durability under high temperature environment and (2) durability under hot and humid environment

The adhesive composition was applied on a release agent layer of a release-treated 550 mm wide polyester film (trade name: PET3811, manufactured by Lintec Co., Ltd.), and the resulting film was dried at 90°C for 4 minutes to provide an adhesive layer 25 µm in thickness.

This film was transferred to a surface of a polarizing plate, and then aged for 7 days under a condition of a temperature of 23°C and a humidity of 65%. Thus, a polarizing plate with an adhesive layer was obtained.
The polarizing plate with the adhesive layer was cut into a size of 19 inches, and the release-treated polyester film was peeled. Subsequently, an edge of the adhesive layer was brought into contact with an alkali glass plate 315 mm x 390 mm (manufactured by Asahi Glass Co., Ltd.) and was attached thereto. Then, the whole of the adhesive layer was laminated with use of a laminator roll. The polarizing plate was then held in an autoclave maintained at 50°C and 5 atmospheric pressure for 20 minutes to give a test plate.

Two such test plates were prepared, and kept for 500 hours under a condition of 85°C (under a high temperature environment) or under a condition of 60°C x relative humidity (RH) 95% (under a hot and humid environment). Any separation, lifting and foaming were visually inspected for, and evaluation was made based on the following evaluation criteria.
○: Poor appearance such as separation, lifting and foaming was not observed.
Δ: Separation, lifting and foaming were slightly observed.
X: Separation, lifting and foaming were clearly observed.

### (3) 180° Tensile Peeling Force

The adhesive composition was applied on a release agent layer of a release-treated 550 mm wide polyester film (trade name: PET3811, manufactured by Lintec Co., Ltd.), and the resulting film was dried at 90°C for 4 minutes to provide an adhesive layer 25 µm in thickness. This film was transferred to a surface of a polarizing plate, and then aged for 7 days under a condition of a temperature of 23°C and a humidity of 65%. Thus, a polarizing plate with an adhesive layer was obtained.

The polarizing plate with the adhesive layer was cut into 2. 5 cm x 15 cm, and the release-treated polyester film was peeled. Subsequently, the polarizing plate was laminated to an alkali glass plate 70 mm x 150 mm (manufactured by Asahi Glass Co., Ltd.) such that the adhesive layer was in contact with the glass plate.
After 20 minutes after the lamination, an edge of the polarizing plate with the adhesive layer was pulled in a 180° direction at a peeling rate of 300 cm/min to determine the force (g/25 mm) from the peeling initiation to the peeling completion. The average value was obtained as 180° tensile peeling force.

### (4) Wettability

The adhesive composition was applied on a release agent layer of a release-treated 550 mm wide polyester film (trade name: PET3811, manufactured by Lintec Co., Ltd.), and the resulting film was dried at 90°C for 4 minutes to provide an adhesive layer 25 µm in thickness. To the surface of this adhesive layer, a 500 mm wide polyester film (trade name: LUMIRROR 25, manufactured by Toray Ltd.) was laminated. The laminate was then aged for 7 days under a condition of a temperature of 23°C and a humidity of 65%. Thus, an adhesive sheet was obtained.

The adhesive sheet was cut into 30 mm x 150 mm to prepare a test specimen. The release-treated polyester film was peeled from the test specimen. The test specimen was bent so that the exposed adhesive layer faced outward and both ends in a longitudinal direction of the test specimen were positioned at the top. The test specimen was held by taking both ends in the longitudinal direction together at one location between fingers. A portion of the adhesive layer in the middle area of the test specimen (the lowest part of the specimen that was bent and held) was put into contact with an alkali glass plate (manufactured by Asahi Glass Co., Ltd.), and the fingers were released. The time required for the test specimen to fit on the surface of the glass plate was measured.

### Example 2

An adhesive composition was obtained in the same manner as Example 1 except that 1-butyl-3-methylimidazolium tetrafluoroborate was used as the ionic liquid. The composition was evaluated for the above items (1) to (4.) in the same manner as Example 1.
The results are shown in Table 1.

### Example 3

An adhesive composition was obtained in the same manner as Example 1 except that trioctylmethylammonium bis(trifluoromethylsulfonyl)imide was used as the ionic liquid. The composition was evaluated for the above items (1) to (4) in the same manner as Example 1.
The results are shown in Table 1.

### Example 4

An adhesive composition was obtained in the same manner as Example 1 except that the BA/2HEA polymer solution obtained in Synthesis Example 2 was used, that 1-hexyl-4-methylpyridinium hexafluorophosphate was used as the ionic liquid and that 0.30 part by weight of XDI was used as the isocyanate crosslinking agent. The composition was evaluated for the above items (1) to (4) in the same manner as Example 1.
The results are shown in Table 1.

### Example 5

An adhesive composition was obtained in the same manner as Example 1 except that the BA/2HEA polymer solution obtained in Synthesis Example 2 was used, that 1-octyl-3-methylimidazolium hexafluorophosphate was used as the ionic liquid and that 0.30 part by weight of XDI was used as the isocyanate crosslinking agent. The composition was evaluated for the above items (1) to (4) in the same manner as Example 1.
The results are shown in Table 1.

### Example 6

An adhesive composition was obtained in the same manner as Example 1 except that the BA/2HEA polymer solution obtained in Synthesis Example 2 was used, that 1-hexyl-3-methylimidazolium trifluoromethanesulfonate was used as the ionic liquid and that 0.30 part by weight of XDI was used as the isocyanate crosslinking agent. The composition was evaluated for the above items (1) to (4) in the same manner as Example 1.
The results are shown in Table 1.

### Example 7

An adhesive composition was obtained in the same manner as Example 1 except that the BA/MA/4HBA polymer solution obtained in Synthesis Example 3 was used. The composition was evaluated for the above items (1) to (4) in the same manner as Example 1.
The results are shown in Table 1.

### Example 8

An adhesive composition was obtained in the same manner as Example 1 except that the BA/MEA/4HBA polymer solution obtained in Synthesis Example 4 was used. The composition was evaluated for the above items (1) to (4) in the same manner as Example 1.
The results are shown in Table 1.

### Example 9

An adhesive composition was obtained in the same manner as Example 1 except that the BA/POA/4HBA polymer solution obtained in Synthesis Example 5 was used. The composition was evaluated for the above items (1) to (4) in the same manner as Example 1.
The results are shown in Table 1.

### Example 10

An adhesive composition was obtained in the same manner as Example 1 except that the BA/Bz/4HBA polymer solution obtained in Synthesis Example 6 was used. The composition was evaluated for the above items (1) to (4) in the same manner as Example 1.
The results are shown in Table 1.

### Comparative Example 1

An adhesive composition was obtained in the same manner as Example 1 except that the ionic liquid was replaced by 1-ethyl-3-methylimidazolium hexafluorophosphate which was a solid salt. The composition was evaluated for the above items (1) to (4) in the same manner as Example 1.

The results are shown in Table 1.

### Comparative Example 2

An adhesive composition was obtained in the same manner as Example 1 except that no ionic liquid was used. The composition was evaluated for the above items (1) to (4) in the same manner as Example 1.
The results are shown in Table 1.

### Comparative Example 3

An adhesive composition was obtained in the same manner as Example 1 except that the amount of 1-hexyl-4-methylpyridinium bis(trifluoromethylsulfonyl)imide was changed from 2 parts by weight to 10 parts by weight. The composition was evaluated for the above items (1) to (4) in the same manner as Example 1.
The results are shown in Table 1.

### Comparative Example 4

An adhesive composition was obtained in the same manner as Example 1 except that dioctyl phthalate as a plasticizer was used instead of the ionic liquid. The composition was evaluated for the above items (1) to (4) in the same manner as Example 1.
The results are shown in Table 1.

### Comparative Example 5

An adhesive composition was obtained in the same manner as Example 1 except that the BA/4HBA polymer solution obtained in Synthesis Example 7 was used. The composition was evaluated for the above items (1) to (4) in the same manner as Example 1.
The results are shown in Table 1.

### Comparative Example 6

An adhesive composition was obtained in the same manner as Example 1 except that the BA/4HBA/AA polymer solution obtained in Synthesis Example 8 was used. The composition was evaluated for the above items (1) to (4) in the same manner as Example 1.

The results are shown in Table 1.

**Table 1**

| | (Meth)acrylic polymer (A) | | | Ionic liquid (B) or other compound | | Crosslinking agent (C) | | (1) Durability at high temperature | (2) Durability under hot and humid environment | (3) 180° tensile peeling force (g/25 mm) | (4) Wettability (sec) |
|---|---|---|---|---|---|---|---|---|---|---|---|
| | Polymer composition (Parts by weight) | Molecular weight (x 10,000) | Parts by weight | Kind | Parts by weight | Kind | Parts by weight. | | | | |
| Ex. 1 | BA/4HBA (99/1) | 160 | 100 | i | 2 | XDI | 0.15 | ○ | ○ | 420 | 10 |
| Ex. 2 | BA/4HBA (99/1) | 160 | 100 | ii | 2 | XDI | 0.15 | ○ | ○ | 420 | 12 |
| Ex. 3 | BA/4HBA (99/1) | 160 | 100 | iii | 2 | XDI | 0.15 | ○ | ○ | 20 | 10 |
| Ex. 4 | BA/2HEA (99/1) | 160 | 100 | iv | 2 | XDI | 0.30 | ○ | ○ | 420 | 10 |
| Ex. 5 | BA/2HEA (99/1) | 160 | 100 | v | 2 | XDI | 0.30 | ○ | ○ | 420 | 10 |
| Ex. 6 | BA/2HEA (99/1) | 160 | 100 | vi | 2 | XDI | 0.30 | ○ | ○ | 420 | 10 |
| Ex. 7 | BA/MA/4HBA (79/20/1) | 160 | 100 | i | 2 | XDI | 0.15 | ○ | ○ | 600 | 10 |
| Ex. 8 | BA/MEA/4HBA (79/20/1) | 160 | 100 | i | 2 | XDI | 0.15 | ○ | ○ | 420 | 10 |
| Ex. 9 | BA/POA/4HBA (79/20/1) | 160 | 100 | i | 2 | XDI | 0.15 | ○ | ○ | 500 | 10 |
| Ex. 10 | BA/Bz/9HBA | 160 | 100 | i | 2 | XDI | 0.15 | ○ | ○ | 540 | 10 |
| Comp. Ex. 1 | BA/4HBA (99/1) | 160 | 100 | vii | 2 | XDI | 0.15 | Δ, Sepn. | ○ | 500 | 15 or more |
| Comp. Ex. 2 | BA/4HBA (99/1) | 160 | 100 | - | 0 | XDI | 0.15 | X, Lift. | ○ | 420 | 15 or more |
| Comp. Ex. 3 | BA/4HBA (99/1) | 160 | 100 | i | 10 | XDI | 0.15 | X, Sepn., Lift. | Δ, Sepn. Lift. | 200 | 8 |
| Comp. Ex. 4 | BA/4HBA (99/1) | 160 | 100 | viii | 2 | XDI | 0.15 | Δ, Sepn., Lift. | Δ, Sepn. Lift. | 340 | 10 |
| Comp. Ex. 5 | BA/4HBA (99/1) | 75 | 100 | i | 2 | XDI | 0.15 | Δ, Foam. | Δ, Foam. | 460 | 10 |
| Comp. Ex. 6 | BA/4HBA/AA (98/1/1) | 160 | 100 | i | 2 | XDI | 0.15 | Δ, Lift. | ○ | 520 | 15 or more |

| | | | | | | | | | | | |
|---|---|---|---|---|---|---|---|---|---|---|---|
| Notes: Sepn.: Separation Lift.: Lifting Foam.: Foaming i: 1-Hexyl-4-methylpyridinium bis(trifluoromethylsulfonyl)imide ii: 1-Butyl-3-methylimidazolium tetrafluoroborate iii: Trioctylmethylammonium bis(trifluoromethylsulfonyl)imide iv: 1-Hexyl-4-methylpyridinium hexafluorophosphate v: 1-Octyl-3-methylimidazolium hexafluorophosphate vi: 1-Hexyl-3-methylimidazolium trifluoromethanesulfonate vii: 1-Ethyl-3-methylimidazolium hexafluorophosphate; solid salt viii: Dioctyl phthalate | | | | | | | | | | | |

Table 1 indicates that Comparative Examples 1, 2 and 4 where no ionic liquid was used resulted in adhesion failure such as separation or lifting of the adhesive layer from the glass substrate under the high temperature environment or the hot and humid environment. Furthermore, the wettability with the glass substrate was poor in Comparative Examples 1 and 2.
Furthermore, even in Comparative Examples 3, 5, and 6 where the ionic liquid was used, adhesion failure under the high temperature environment or under the hot and humid environment was observed when the ionic liquid was excessively added or the weight average molecular weight of the (meth)acrylic polymer was insufficient. Furthermore, the wettability with the glass substrate was poor and adhesion failure was observed under the high temperature environment when the (meth)acrylic polymer contained an excessive amount of the monomer containing at least one of the carboxyl, amino and amide groups. Furthermore, when the ionic liquid was used in an excessive amount, the wettability with the glass substrate was good but the adhesiveness was significantly poor.

On the other hand, in Examples 1 to 10, no adhesion failure was observed under the high temperature environment or the hot and humid environment, the durability was good and also the wettability and adhesiveness with the glass substrate were excellent.

### Industrial Applicability

The present invention is suitably used in the production of liquid crystal displays, particularly the production of large liquid crystal displays. Accordingly, the present invention is particularly useful for the manufacturing industry of liquid crystal displays.

## Claims

1. An adhesive composition for a polarizing plate comprising:
100 parts by weight of a (meth)acrylic polymer (A) with a weight average molecular weight of 1,000,000 or more obtained by copolymerizing at least a monomer containing a hydroxyl group (a1), a monomer containing at least one of a carboxyl group, an amino group and an amide group as an optional monomer (a2), and a substituted and/or unsubstituted alkyl (meth)acrylate (a3) other than the above (a1) and (a2), with the proviso that the monomer (a2) is fed in an amount of 0 to 0.5% by weight relative to the total amount of monomers;
0.1 to 8 parts by weight of an organic molten salt (B) that is liquid at room temperature; and
0.03 to 1 part by weight of an isocyanate-based crosslinking agent (C).

2. The adhesive composition for a polarizing plate according to claim 1, wherein the organic molten salt (B) that is liquid at room temperature is an onium salt comprising a cation having 6 to 50 carbon atoms and containing a quaternary nitrogen atom, and an anion containing a fluorine atom.

3. The adhesive composition for a polarizing plate according to claim 2, wherein the cation having 6 to 50 carbon atoms and containing a quaternary nitrogen atom is selected from a quaternary ammonium cation, an imidazolium cation, a pyrrolidinium cation, a pyridinium cation and a piperidinium cation, and the anion containing a fluorine atom is a bis(trifluoromethylsulfonyl)imidate ion, a trifluoromethanesulfonate ion, a tetrafluoroborate ion or a hexafluorophosphate ion.

4. The adhesive composition for a polarizing plate according to claim 3, wherein the monomer (a1) is a hydroxyalkyl (meth)acrylate; the monomer (a3) is an alkyl (meth)acrylate, a combination of an alkyl (meth)acrylate and an alkoxyalkyl (meth)acrylate, a combination of an alkyl (meth)acrylate and an aryloxyalkyl (meth)acrylate, or a combination of an alkyl (meth) acrylate and an arylalkyl (meth) acrylate; and the feeding amount of the monomer (a2) is not more than 0.2% by weight.

5. The adhesive composition for a polarizing plate according to claim 4, wherein the alkyl (meth) acrylates include n-butyl acrylate, and the feeding amount of the n-butyl acrylate in the synthesis of the (meth)acrylic polymer (A) is not less than 70% by weight relative to the total amount of monomers.

6. A polarizing plate with an adhesive layer, comprising an adhesive layer obtained from the adhesive composition of any one of claims 1 to 5, on a surface of the polarizing plate.

## Patentansprüche

1. Klebstoffzusammensetzung für eine Polarisationsplatte, die enthält:
100 Gewichtsanteile eines (Meth)Acrylpolymers (A) mit einem gewichtsgemittelten Molekulargewicht von 1000000 oder mehr, das durch Copolymerisation wenigstens eines Monomers, das eine Hydroxylgruppe (a1) enthält, eines Monomers, das wenigstens eine Carboxylgruppe enthält, einer Aminogruppe und einer Amidgruppe als eines optionalen Monomers (a2) und eines substituierten und/oder nicht substituierten Alkyl-(Meth)Acrylats (a3), das von den Obigen (a1) und (a2) verschieden ist, erhalten wird, wobei vorgesehen ist, dass das Monomer (a2) in einer Menge von 0 bis 0,5 Gew.-% in Bezug auf die Gesamtmenge von Monomeren zugeführt wird;
0,1 bis 8 Gewichtsanteile eines organischen geschmolzenen Salzes (B), das bei Raumtemperatur flüssig ist; und
0,03 bis 1 Gewichtsanteile eines vernetzten Wirkstoffs (C) auf Isocyanat-Basis.

2. Klebstoffzusammensetzung für eine Polarisationsplatte nach Anspruch 1, wobei das organische geschmolzene Salz (B), das bei Raumtemperatur flüssig ist, ein Oniumsalz ist, das ein Kation, das 6 bis 50 Kohlenstoffatome besitzt und ein quaternäres Stickstoffatom aufweist, und ein Anion, das ein Fluoratom aufweist, enthält.

3. Klebstoffzusammensetzung für eine Polarisationsplatte nach Anspruch 2, wobei das Kation, das 6 bis 50 Kohlenstoffatome besitzt und ein quaternäres Stickstoffatom aufweist, ausgewählt ist aus einem quaternären Ammonium-Kation, einem Imidazolium-Kation, einem Pyrrolidinium-Kation, einem Pyridinium-Kation und einem Piperidinium-Kation und das Anion, das ein Fluoratom enthält, ein Bis(Trifluor-Methylsulfonyl-)Imidat-Ion, ein Trifluor-Methansulfonat-Ion, ein Tetrafluorborat-Ion oder ein Hexafluorphosphat-Ion ist.

4. Klebstoffzusammensetzung für eine Polarisationsplatte nach Anspruch 3, wobei das Monomer (a1) ein Hydroxyalkyl-(Meth)Acrylat ist; das Monomer (a3) ein Alkyl-(Meth-)Acrylat, eine Kombination aus einem Alkyl-(Meth)Acrylat und einem Alkoxyalkyl-(Meth)Acrylat, eine Kombination aus einem Alkyl-(Meth)Acrylat und einem Aryloxyalkyl-(Meth)Acrylat oder eine Kombination aus einem Alkyl-(Meth)Acrylat und einem Arylalkyl-(Meth)Acrylat ist; und die Zufuhrmenge des Monomers (a2) nicht mehr als 0,2 Gew.-% beträgt.

5. Klebstoffzusammensetzung für eine Polarisationsplatte nach Anspruch 4, wobei die Alkyl-(Meth)Acrylate n-Butylacrylat enthalten und die Zufuhrmenge des n-Butylacrylats in der Synthese des (Meth)Acrylat-Polymers (A) nicht weniger als 70 Gew.-% in Bezug auf die Gesamtmenge von Monomeren ist.

6. Polarisationsplatte mit einer Klebstoffschicht, die eine Klebstoffschicht, die aus der Klebstoffzusammensetzung nach einem der Ansprüche 1 bis 5 erhalten wird, auf einer Oberfläche der Polarisationsplatte aufweist.

## Revendications

1. Composition adhésive pour une plaque polarisante comportant :
100 parties en poids d'un polymère (méth)acrylique (A) ayant un poids moléculaire moyen en poids de 1 000 000 ou plus obtenu par copolymérisation d'au moins un monomère contenant un groupe hydroxyle (a1), d'un monomère contenant au moins un élément parmi un groupe carboxyle, un groupe amino et un groupe amide en tant que monomère facultatif (a2), et d'un (méth)acrylate d'alkyle substitué et/ou non substitué (a3) autre que les éléments (a1) et (a2) ci-dessus, à condition que le monomère (a2) soit fourni en une quantité de 0 à 0,5 % en poids par rapport à la quantité totale de monomères ;
0,1 à 8 parties en poids d'un sel organique fondu (B) qui est liquide à température ambiante ; et
0,03 à 1 partie en poids d'un agent de réticulation à base d'isocyanate (C).

2. Composition adhésive pour une plaque polarisante selon la revendication 1, dans laquelle le sel organique fondu (B) qui est liquide à température ambiante est un sel d'onium comportant un cation possédant de 6 à 50 atomes de carbone et contenant un atome d'azote quaternaire, et un anion contenant un atome de fluor.

3. Composition adhésive pour une plaque polarisante selon la revendication 2, dans laquelle le cation possédant de 6 à 50 atomes de carbone et contenant un atome d'azote quaternaire est choisi parmi un cation ammonium quaternaire, un cation imidazolium, un cation pyrrolidinium, un cation pyridinium et un cation pipéridium, et l'anion contenant un atome de fluor est un ion bis(trifluorométhylsulfonyl)-imidate, un ion trifluorométhanesulfonate, un ion tétra-fluoroborate ou un ion hexafluorophosphate.

4. Composition adhésive pour une plaque polarisante selon la revendication 3, dans laquelle le monomère (a1) est un (méth)acrylate d'hydroxyalkyle ; le monomère (a3) est un (méth)acrylate d'alkyle, une combinaison d'un (méth)acrylate d'alkyle et d'un (méth)acrylate d'alcoxyalkyle, une combinaison d'un (méth)acrylate d'alkyle et d'un (méth)acrylate d'aryloxyalkyle, ou une combinaison d'un (méth)acrylate d'alkyle et d'un (méth)acrylate d'arylalkyle ; et la quantité d'alimentation en monomère (a2) n'est pas supérieure à 0,2 % en poids.

5. Composition adhésive pour une plaque polarisante selon la revendication 4, dans laquelle les (méth)acrylates d'alkyle incluent de l'acrylate de n-butyle, et la quantité d'alimentation de l'acrylate de n-butyle dans la synthèse du polymère (méth)acrylique (A) n'est pas inférieure à 70 % en poids par rapport à la quantité totale de monomères.

6. Plaque polarisante munie d'une couche adhésive, comportant une couche adhésive obtenue à partir de la composition adhésive selon l'une quelconque des revendications 1 à 5, sur une surface de la plaque polarisante.
